# EUROPÄISCHE PATENTSCHRIFT

(11) **EP 2 361 659 B1**
(45) Veröffentlichungstag und Bekanntmachung des Hinweises auf die Patenterteilung: **22.08.2012**
(21) Anmeldenummer: 11164665.9
(22) Anmeldetag: 01.04.2008
(51) Int. Cl.: B01D 1/16, B01D 1/28, B01D 3/00, B01D 3/06, B01D 3/10, B01D 5/00, B01D 3/42

(54) **Verfahren zum Destillieren eines Ausgangsmaterials und Anlage zum Durchführen eines solchen Verfahrens**
Method for distilling a starting material and installation for carrying out said method
Procédé pour distiller un matériau de départ et installation pour mettre un tel procédé en oeuvre

(30) Priorität: 04.04.2007 CH 5472007
(43) Veröffentlichungstag der Anmeldung: 31.08.2011
(62) Teilanmeldung aus: 08714793.0
(73) Patentinhaber: Lehmann, Markus, 5610 Wohlen (CH)
(72) Erfinder: Lehmann, Markus, 5610 Wohlen (CH); Braendli, Markus, 5018 Erlinsbach (CH)
(74) Vertreter: Schneider Feldmann AG Patent- und Markenanwälte

(56) Entgegenhaltungen:
- WO-A-02/09837
- DE-A1- 10 006 036
- DE-A1- 19 940 992
- US-A- 3 218 241

## Beschreibung

### Technisches Gebiet

Die Erfindung betrifft ein Verfahren zum Destillieren eines Ausgangsmaterials umfassend eine zu destillierende Flüssigkeit, unter Verwendung eines gasdichten, auf Über- und/oder Unterdruck festen Behältersystems, das einen Verdampfer mit dem Ausgangsmaterial, das temperiert werden kann, einen Kondensator zum Kondensieren der zu Dampf gewordenen, temperierbaren Flüssigkeit zum Kondensat, sowie einen den Verdampfer und den Kondensator verbindenden Dampfraum umfasst. Zudem betrifft die Erfindung eine Anlage zum Durchführen eines solchen Verfahrens.

### Stand der Technik

Destillationsverfahren unter Verwendung solcher Anlagen eignen sich zum Trennen von Flüssigleiten, die mit weiteren Flüssigkeiten und/oder Feststoffen beispielsweise zu Dispersionen oder Emulsionen vermischt sind oder die ineinander löslich sind. Eine bekannte Anwendung ist die Alkohol-Destillation. Die zu destillierende Flüssigkeit ist in diesem Fall Alkohol, in vielen anderen Anwendungen Wasser.

Bekannte Verfahren verwenden als Kondensatoren meistens aufwändige Geräte umfassend ineinander verlaufende Röhrensysteme, wie sie bei der Destillation von Alkohol bekannt sind. Nachteilig an solchen Systemen ist einerseits der komplizierte apparative Aufbau und andererseits das Erfordernis einer hohen Temperaturdifferenz zwischen dem Ausgangsmaterial und dem Kondensator, welche nötig ist, um eine befriedigende Ausbeute des Verfahrens zu erlangen. Das Erreichen dieser hohen Temperaturdifferenz ist sehr teuer.

Es hat sich gezeigt, dass die Effizienz des Destillationsverfahrens verbessert werden kann, wenn der Dampfraum möglichst von Fremdgas befreit ist. In der WO 02/09837 wird eine Destillationsanlage beschrieben, bei der Fremdgas aus dem Dampfraum entfernt werden soll. Dies wird dadurch erreicht, indem eine Vakuumpumpe mit einer hohen Leistung und langen Betriebszeiten das Medium aus dem Bad absaugt. Leider wird mit dieser Methode auch sehr viel Dampf mit dem Kondensat weggesaugt. Dies belastet einerseits unnötig die Pumpe, und andererseits wird durch dieses ständige Absaugen sehr viel Kondensat mit abgesaugt, das dann nicht mehr für die Energierückgewinnung zur Verfügung steht.

In der EP 0563628 wird eine weitere Destillationsanlage vorgestellt, welche im Kondensator mittels einer ständig laufenden Vakuumpumpe eine Saugwirkung erzeugt, um die Brüden vom Verdampfer zum Kondensator zu saugen. Auch dieses Verfahren braucht einerseits viel Betriebsenergie, andererseits wird auch hier Kondensat aus dem Dampfraum abgesaugt, wodurch zusätzlich Energie in Form von Wärme verloren geht.

Aus der US 3218241 ist eine Destillationsanlage und ein auf dieser auszuführender Destillationsprozess bekannt, bei welchem dem zu destillierenden Wasser CO₂ zugefügt wird. Dieses wird bei der Verdampfung freigesetzt und muss daher abgesaugt werden. Zu diesem Zweck pumpt eine Pumpe ständig Gas aus dem Dampfraum, wofür viel Energie aufgewendet werden muss.

Aus der DE 10006036 ist eine Anlage zum Trocknen von Holz und ein entsprechendes Destillationsverfahren bekannt. Bei diesem Verfahren wird in einer das Holz aufnehmenden Kammer ein Überdruck erzeugt. Nach Öffnung eines Ventils wird der Überdruck in der Kammer über eine Drossel langsamen reduziert, indem Gas aus der Kammer in einen kühleren Kondensator mit geringerem Druck geleitet wird. Sobald die Druckdifferenz zwischen der Kammer und dem Kondensator geringer als beispielsweise 100 bar ist, wird der Prozess gestoppt und die Druckdifferenz erneut auf neue Werte gebracht. Auch dieser Prozess ist sehr energieaufwändig.

Bestreben der vorliegenden Erfindung ist es, ein möglichst energiearmes Destillationsverfahren zu beschreiben.

### Darstellung der Erfindung

Aufgabe der vorliegenden Erfindung ist es, ein energiearmes Destillationsverfahren anzugeben, welches bei einer kleinen Temperaturdifferenz bereits eine grosse Ausbeute erreicht. Zudem ist eine kostengünstige, transportfähige Anlage anzugeben, welches dazu geeignet ist, das genannte Verfahren durchzuführen.

Die Aufgabe wird gelöst durch ein Verfahren sowie durch eine Anlage, beschrieben in den unabhängigen Patentansprüchen.

Die der Erfindung zugrunde liegende Idee besteht darin, dass das Verfahren in einem idealen Druck-Temperaturbereich durchgeführt wird, bei dem einerseits der Prozess der Destillation optimal abläuft und bei dem andererseits keine Energie verschwendet wird durch Absaugen von wertvollem Dampf aus dem Dampfraum.

Dazu muss der Druck im Dampfraum ständig überwacht und mit dem aus der aktuellen Temperatur im Dampfraum bestimmten Sättigungsdampfdruck verglichen werden. Idealerweise liegt der Druck in einem engen Bereich knapp über dem Sättigungsdampfdruck. Sobald Fremdgas eindringt, steigt der Druck und der Prozess verläuft suboptimal. Dann muss einerseits Gas abgesaugt werden, damit der Pro-zess wieder im optimalen Druckbereich arbeiten kann, andererseits muss gezielt das Fremdgas abgesaugt werden. Dies wird dadurch erreicht, indem am Ende des Kondensationsweges abgesaugt wird, weil sich dort das Fremdgas ansammelt. Beim Absaugen muss der Druck weiterhin überwacht werden. Dieser darf nicht unter den Sättigungsdampfdruck fallen, da sonst die optimalen Bedingungen erneut nicht erfüllt sind. Daher muss das Absaugen vorher gestoppt werden, solange der Druck noch knapp über dem Sättigungsdampfdruck liegt. In diesem Zustand befindet sich eine kleine, tolerierbare Restmenge Fremdgas im Dampfraum, und der Prozess verläuft optimal. Solange kein Fremdgas in den Dampfraum eindringt und solange die Temperatur im Kondensator niedriger ist als im Verdampfer, läuft der Prozess sehr effizient weiter, ohne dass Korrekturen notwendig sind, insbesondere ohne Abpumpen.

Eine weitere erfindungsgemässe Idee der Erfindung besteht darin, dass die Destillationsanlage erfindungsgemäss in einem Container, vorzugsweise in einem ISO Container derart integriert ist, dass Teile des Containers, insbesondere Wände, als Teile des Bahältersystems wirken. Solche Container sind kostengünstig zu erwerben, eignen sich hervorragend für den Transport und sind in dichten (leckfreien) Ausführungen erhältlich.

Eine hohe Anforderung stellt sich somit an die hochgradige Dichtheit der Anlage. Um sich aufwändige Arbeit beim Suchen von kleinen Lecks zu sparen, können sicherheitshalber alle kritischen Stellen, insbesondere Bereiche von Flanschen, Pumpen etc, mit dem Kondensat geflutet werden. Dadurch dringt im Falle eines Lecks etwas Kondensat in den Behälter ein, was den Prozess in keiner Weise beeinträchtigt.

Die Leistung der Destillationsanlage ist mit diesem erfindungsgemässen Prozess bei geringem Energieaufwand optimal. Zudem kann die Temperaturdifferenz zwischen Verdampfer und Kondensator klein gehalten werden, was für viele Anwendungen, bei denen Abwärme von Kraftwerken genutzt werden kann, ein weiterer wirtschaftlicher Vorteil sein kann.

Weitere vorteilhafte Ausführungsformen gehen aus den Unteransprüchen hervor.

### Kurze Beschreibung der Zeichnungen

Im Folgenden wird die Erfindung unter Beizug der Zeichnungen näher erklärt. Es zeigen
- Fig. 1: eine schematische Darstellung einer erfindungsgemässen Destillationsanlage;
- Fig. 2: ein Druck-Temperaturdiagramm mit dem Sättigungsdampfdruck der zu destillierenden Flüssigkeit;
- Fig. 3: eine schematische Darstellung einer Anordnung mehrer erfindungsgemässer Destillationsanlagen;
- Fig. 4: eine schematische Darstellung einer erfindungsgemässer Destillationsanlage in einem Container, von oben betrachtet.

### Wege zur Ausführung der Erfindung

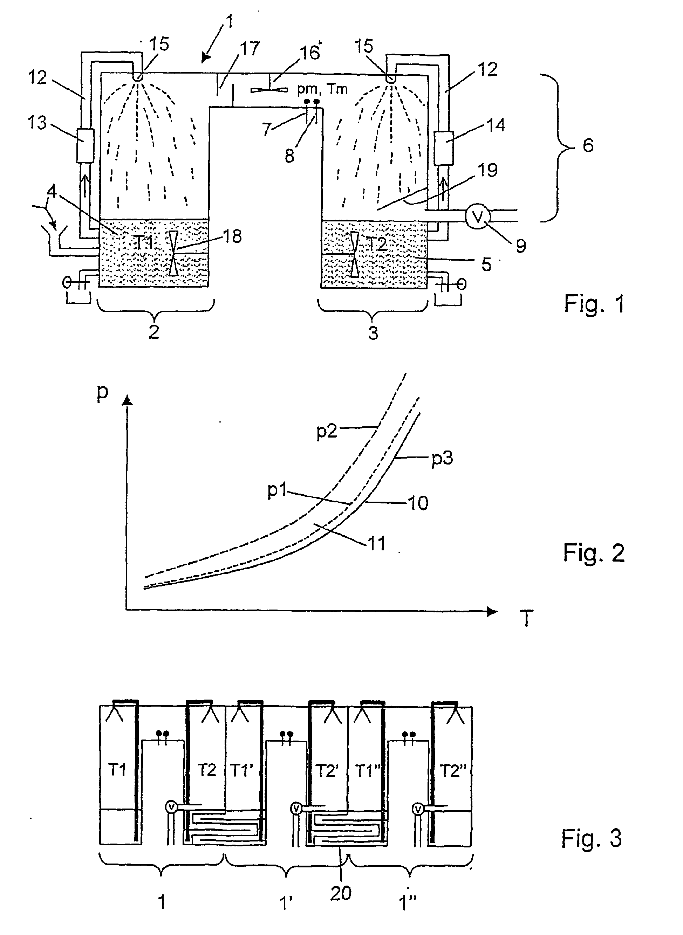

Die Fig. 1 zeigt eine einfache Ausführung einer erfindungsgemässen Destillationsanlage. Diese umfasst ein Behältersystem 1, das in die Bereiche Verdampfer 2, Kondensator 3 und Dampfraum 6 unterteilt ist, wobei das Behältersystem 1 auf Über- und/oder Unterdruck fest sein muss. Im Verdampfer 2 befindet sich das Ausgangsmaterial 4, das die zu destillierende Flüssigkeit Fd umfasst und temperierbar ist. Der Kondensator 3 nimmt das ebenfalls temperierbare Kondensat 5 auf, welches durch die Destillation nach der Kondensation entsteht. Das Ausgangsmaterial 4 sowie das Kondensat 5 können auch ausserhalb des Behältersystems 1 temperiert werden.

Der Dampfraum 6 verbindet den Verdampfer 2 mit dem Kondensator 3. Er ist mit dem zu kondensierenden Dampf Dk gefüllt. Dieser Dampf Dk entsteht durch Verdampfen der zu destillierenden Flüssigkeit Fd aus dem Verdampfer 2. Der Dampfraum 6 ist ausgestattet mit einem Drucksensor 7 zum Messen des sich im Dampfraum 6 eingestellten Mischdruckes pm, mit einem Temperaturfühler 8 zum Messen der sich im Dampfraum 6 eingestellten Mischtemperatur Tm, sowie mit einem Druckregulator 9 zum Einstellen, insbesondere zum reduzieren des Mischdruckes pm im Dampfraum 6.

Zur Durchführung der Destillation wird zuerst der Verdampfer 2 mit dem Ausgangsmaterial 4 auf eine erste Temperatur T1 und der Kondensator 3 auf eine zweite, niedrigere Temperatur T2 gebracht. Anschliessend wird der Mischdruck pm und die Mischtemperatur Tm gemessen. Aus der gemessenen Mischtemperatur Tm lässt sich der Sättigungsdampfdruck ps der Flüssigkeit Fd mit der Temperatur Tm bestimmen.

Der Sättigungsdampfdruck ist eine Eigenschaft einer Flüssigkeit. Er beschreibt den bei einer bestimmten Temperatur maximalen Dampfdruck und wird oft abgekürzt mit Dampfdruck bezeichnet. Beispielsweise entweichen aus reinen Flüssigkeiten solange Atome/Moleküle in die Gasphase, bis sich darin ein von der Stoffart und der Gleichgewichtstemperatur abhängiger Druck eingestellt hat. Dieser Druck ist der Sättigungsdampfdruck. Er herrscht, wenn das Gas im thermodynamischen Gleichgewicht mit der Flüssigkeit steht. In diesem Zustand ist die Verdampfung der Flüssigkeit mengenmässig gleich der Kondensation des Gases. Keine der Phasen wächst unter dem Strich auf Kosten der anderen, wodurch beide nebeneinander stabil existieren können. Man spricht daher auch von einem dynamischen Gleichgewicht.

In Fig. 2 ist ein Beispiel einer Sättigungsdampfdruckkurve 10 eines Stoffes als Funktion eines Druckes über der Temperatur angegeben, wobei die flüssige Phase des Stoffes im linken oberen, die gasförmige Phase im rechten unteren Bereich der Kurve vorliegt. Der Phasenwechsel geschieht im Bereich der Sättigungsdampfdruckkurve 10. Sättigungsdampfdruckkurven gebräuchlicher Stoffe sind bekannt und können in Handbüchern nachgeschlagen oder über Formeln interpoliert werden.

Anschliessend an die Ermittlung des Sättigungsdampfdrucks ps wird ein Solldruckbereich 11 bestimmt. In diesem Solldruckbereich 11 sollte sich vorzugsweise der Mischdruck pm im Dampfraum 6 befinden, bei der dazugehörigen Mischtemperatur Tm, damit die Destillation optimal, d.h. möglichst energiearm und effizient, abläuft.

Der Solldruckbereich 11 liegt knapp oberhalb der Sättigungsdampfdruckkurve, da er das Mass an druckerhöhendem Fremdgas einschliesst. Er ist durch eine untere Druckgrenze p1 und eine obere Druckgrenze p2 begrenzt, wie in Fig. 2 dargestellt. Die untere Druckgrenze p1 entspricht theoretisch dem Sättigungsdampfdruck ps, wird aber aus praktischen Gründen für die Steuerung auf mindestens 0.1% über den Sättigungsdampfdruck ps gesetzt. Die obere Druckgrenze p2 ist höchstens 6% über dem Sättigungsdampfdruck ps.

Zunächst wird der Mischdruck pm mit dem Solldruckbereich 11 verglichen. Bei Prozessbeginn wird der Mischdruck pm weit über dem Solldruckbereich 11 liegen. In diesem Fall wird der Druck im Dampfraum 6 genau so lange reduziert, bis der Mischdruck pm die untere Druckgrenze p1 erreicht hat. Dies geschieht vorzugsweise mit dem Druckregulator 9, der eine Pumpe sein kann. Sobald die Druckgrenze p1 erreicht ist, wird der Druckregulator 9 abgestellt.

Nun läuft die Destillation selbständig, solange das Ausgangsmaterial 4 im Verdampfer 2 eine Temperatur T1 hat, die höher ist als die Mischtemperatur Tm. Da das Gas anstrebt, im thermodynamischen Gleichgewicht mit der Flüssigkeit zu stehen, wird die Verdampfung der zu destillierenden Flüssigkeit Fd gefördert. Da wiederum ein thermodynamisches Gleichgewicht angestrebt wird, wird die Kondensation gefördert, solange die Temperatur T2 des Kondensators tiefer ist als die Mischtemperatur Tm.

Solange der Mischdruck pm nicht über die Druckgrenze p2 steigt, stellt sich ohne Eingreifen des Druckregulators 9 auch bei Veränderungen der Temperatur des zu verdampfenden oder des zu kondensierenden Mediums automatisch der angestrebte, prozessoptimale Mischdruck ein.

Während die Destillation läuft, werden ständig die Mischtemperatur Tm und der Mischdruck pm überwacht, bis der Mischdruck pm die obere Druckgrenze p2 erreicht hat. Der Druck kann sich erhöhen, weil beispielsweise das Behältersystem 1 oder eine andere Komponente der Anlage ein kleines Leck aufweisen, wodurch Fremdgas in den Dampfraum 6 eindringen kann, oder weil sich Fremdgase aus anderen Stoffen der Anlage oder aus dem Ausgangsmaterial 4 gelöst haben. Sobald der Mischdruck pm die obere Druckgrenze p2 erreicht oder überschritten hat, wird der Druck im Dampfraum 6 durch Einschalten des Druckregulators resp. der Pumpe 9 wieder gesenkt. Sobald der Mischdruck pm die untere Druckgrenze p1 erreicht hat, kann der Druckregulator 9 wieder abgeschaltet werden. Nun läuft die Destillation wieder mit optimalen Parametern. Diese Vorgänge können so lange fortgesetzt werden, wie zu destillierendes Gemisch zugeführt und Kondensat abgeführt werden können.

Die Güte der Kondensation hängt massgeblich vom Fremdgasanteil ab. Ein Fremdgasanteil im Dampfraum von einzelnen Promillen kann die Kondensation bereits um 20 bis 50 % reduzieren. Daher wird der Mischdruck ständig überwacht und mit dem Solldruckbereich 11 verglichen.

Es hat sich erwiesen, dass sich das Fremdgas sich am Ende des Kondensationsweges ansammelt, da es durch den Gasstrom, der vom Ausgangsmaterial 4 durch den Dampfraum 6 zum Kondensat 5 strömt, mitgespült wird, aber letztlich nicht kondensieren kann. Daher ist es vorteilhaft, den Dampf am Ende des Kondensationsweges im Kondensator 3 abzusaugen, direkt beim Kondensat 5. Auf diese Weise kann beim Reduzieren des Mischdruckes pm die höchste Konzentration von Fremdgas aus dem Behältersystem 1 entfernt werden. Andererseits soll darauf geachtet werden, dass das in Tropfen abfallende Kondensat nicht direkt in den Saugstrom des Druckregulators resp. der Pumpe 9 gerät. Dies kann durch eine Schutzblende 19 erreicht werden.

Der Solldruckbereich 11 soll dabei nicht zu nahe an der Sättigungsdampfdruckkurve 10 liegen, da sonst bei der Reduktion des Mischdruckes pm zu viel des zu kondensierenden Dampfes Dk durch die Pumpe 9 abgesaugt wird. Es hat sich als vorteilhaft erwiesen, die untere Druckgrenze p1 vorzugsweise mindestens 0.2% und die obere Druckgrenze p2 vorzugsweise höchstens 4% über dem Sättigungsdampfdruck ps zu wählen. Im Gegensatz zu herkömmlichen Destillationsverfahren überwacht das erfindungsgemässe Verfahren stets den vorherrschenden Mischdruck pm im Dampfraum 6 und vergleicht diesen mit dem Solldruckbereich 11, um bei Bedarf den Mischdruck pm entsprechend zu regeln. Herkömmliche Verfahren saugen meist unentwegt Gas aus dem Dampfraum ab und arbeiten somit in einem Druckbereich, der unterhalb des Sättigungsdampfdruckes ps liegt, wodurch einerseits viel Energie aufgewendet werden muss und andererseits viel des energetisch wertvollen Kondensates unnötigerweise aus dem Dampfraum entfernt wird. Das vorliegende Verfahren aber arbeitet die meiste Zeit ohne Vakuumpumpe, da diese nur zeitweise und nur kurz eingeschalten werden muss.

Die Temperaturdifferenz T1-T2 zwischen dem Verdampfer 2 und dem Kondensator 3 kann mit diesem erfindungsgemässen Verfahren besonders klein gewählt werden und beträgt vorzugsweise zwischen 1 K und 10K, im ldealfall zwischen 1 K und 3K. Dies ist ein enormer energetischer Vorteil, weil dadurch wenig Energie zum Schaffen der Temperaturdifferenz aufgewandt werden muss.

Die Verdampfung und/oder die Kondensation können gefördert werden, indem die Oberflächen des Ausgangsmaterials 4 im Verdampfer 2 und/oder die Oberfläche des Kondensats 5 im Kondensator 3 vergrössert werden. Eine Oberflächenvergrösserung lässt sich beispielsweise durch ein feines Zersprühen des Ausgangsmaterials 4 resp. des Kondensats 5 erreichen. Eine dafür eingerichtete feine Düse einer Zersprüheinheit 15 im Verdampfer 2 und/oder im Kondensator 3 kann jede Sekunde eine Oberfläche von mehreren Quadratmetern erzeugen, an welcher Dampf entsteht resp. der zu kondensierende Dampf Dk kondensieren kann. Vorteilhafter weise wird das Zersprühen derart richtungsorientiert angeordnet, dass eine optimale Durchmischung des Dampfes im Dampfraum 6 zustande kommt. Dies ist wichtig, um einen möglichst grossen Wärmeübergang zwischen dem Ausgangsmaterial 4 und dem Dampf im Dampfraum 6 zu erreichen. Dadurch wird die Effizienz gefördert und die Mischtemperatur Tm lässt sich zuverlässig bestimmen. Andernfalls oder zusätzlich kann ein Ventilator 16 im Dampfraum 6 angeordnet werden, um die gewünschte Durchmischung des Dampfes zu erreichen. Eine Heizung 13 im Bereich von Zuführleitungen 12 zur Zersprüheinheit 15 seitens Verdampfer 2 und eine Kühlung 14 im Bereich der Zuführleitungen 12 von Zersprüheinheit 15 seitens Kondensator 3 sorgen für das Erreichen der Solltemperaturen T1 und T2 im Verdampfer 2 und im Kondensator 3. Natürlich können die Temperatur regulierenden Einheiten 13 und 14 auch direkt im Ausgangsmaterial 4 und im Kondensat 5 angeordnet sein.

Die Oberflächenvergrösserung kann auch dadurch erreicht werden, indem eine flächenvergrössernde, poröse Füllpackung im Verdampfer 2 und/oder im Kondensator 3 eingebracht wird. Diese ermöglichen im Kondensator eine maximale Temperaturangleichung zwischen dem Mischdampf und dem Kondensat.

Eine weitere bevorzugte Ausführungsform umfasst eine oder mehrere Blenden 17 oder eine Tropfen abscheidende Füllung, welche verhindern, dass Tropfen des gesprühten Ausgangsmaterials 4 direkt in den Kondensator 3 gelangen können. Umgekehrt sollen auch keine Tropfen des Kondensats 5 in den Verdampfer 2 gelangen. Zudem können Mischer 18 das Ausgangsmaterial 4 und/oder das Kondensat 5 mischen, um deren Oberflächentemperaturen konstant zu halten.

In Fig. 3 ist eine Anlage dargestellt mit einer weiteren Verbesserung der Effizienz. Die Verbesserung wird erreicht, indem das Verfahren in zwei oder mehreren solchen Behältersystemen 1, 1', 1" stufenweise durchgeführt wird. Jedes Behältersystem 1, 1', 1" arbeitet in einem anderen Temperaturbereich (T1, T2), (T1', T2'), (T1", T2"). Die Temperaturbereiche der einzelnen Behältersysteme 1, 1', 1" unterscheiden sich, sie grenzen vorzugsweise aneinander an. In einem ersten Behältersystem 1 wird das Verfahren beispielsweise mit den Temperaturen T1 = 90°C und T2 = 80°C durchgeführt, wobei sich eine Mischtemperatur im Dampfraum von beispielsweise 85°C einstellt. Im zweiten Behältersystem 1' werden dann die Temperaturen T1' = 80°C und T2' = 70°C eingestellt, im dritten Behältersystem 1" die Temperaturen T1" = 70°C und T2" = 60°C etc., und im letzten Behältersystem 1"' beispielsweise die Temperaturen T1"' = 40°C und T2"' = 30°C.

Vorzugsweise wird die Energie zum Temperieren eines Verdampfers 2 oder Kondensators 3 mindestens teilweise direkt oder indirekt über Wärmetauscher aus der Energie eines anderen Verdampfers 2 oder Kondensators 3 gewonnen wird, dessen Temperatur verändert werden soll.

Um Energie zu sparen kann die Fremdgasbefreiung mittels einer Vakuumstrahlpumpe durchgeführt werden, welche entweder mit dem zu versprühenden Kondensat 5 der selben oder einer kühleren Stufe, mit Dampf einer anderen Stufe oder mit Umgebungsluft angetrieben wird.

Bei einer solchen Anordnung lässt sich dies einfach erreichen, indem beispielsweise jeweils ein Wärmetauscher 20 zwischen einem Kondensat 5 und einem Ausgangsmaterial 4 eines folgenden Behältersystems 1 oder einer Serie vorangehender Stufen angeordnet ist, wenn sie dieselbe Temperaturen haben sollen. Vorzugsweise werden dazu Plattenwärmetauscher verwendet.

Die Verdampfer 2 und/oder Kondensatoren 3 der verschiedenen Behältersysteme 1, 1', ... können insbesondere übereinander angeordnet sein. Besonders geeignet ist eine horizontale Anordnung der Kondensatoren und eine vertikale Anordnung der Verdampfer. Die notwendigen Verbindungen zwischen den einzelnen Behälterkomponenten werden jeweils mit Dampfleitungen erreicht. Der Vorteil liegt besonders im energiearmen Verfahren der Destillation, da die Energie optimal genutzt werden kann. Die verwendeten Wärmetauscher können innerhalb oder ausserhalb des Behältersystems 1 angeordnet sein. Gründe für die externe Anordnung sind vor allem der bessere Zugang für eine Reinigung der Wärmetauscher. Als Wärmetauscher eignen sich insbesondere Plattenwärmetauscher oder Rohrbündel.

Um abgesehen von den Betriebskosten auch die Anschaffungskosten niedrig zu halten, werden Behältersysteme 1 und/oder andere Komponenten der Anlage, beispielsweise die Verrohrung, vorzugsweise ganz oder hauptsächlich aus kostengünstigem Kunststoff hergestellt.

Das Behältersystem 1 muss vorzugsweise nur auf Überdruck oder auf Unterdruck stabil sein, nicht beides. Dies ermöglicht einen kostengünstigen Aufbau des Behältersystems 1. Er kann beispielsweise aus einer technischen Kunststofffolie bestehen, die sich an einem festen Gerüst, das innerhalb oder ausserhalb der Folie angeordnet ist, abstützt. Die Unterdrucke müssen nicht so stark sein. Für Wasser ist der absolute Dampfsättigungsdruck bei 50°C noch 123 mbar (relativ -877 mbar). Daher ist die Anforderung der Reissfestigkeit an die Folie noch in einem Bereich, in dem Materialien zu vernünftigen Preisen erhältlich sind.

Wenn mit Temperaturen über 100°C gearbeitet wird, so muss ein Überdruck im Behältersystem 1 erzeugt werden, um die Destillation nach dem erfindungsgemässen Verfahren ins Laufen zu bringen. In diesem Fall müsste das Gerüst ausserhalb der Folie angeordnet sein. Der Druckregulator 9 ist in diesem Fall ein Ventil, das Gas aus dem Dampfraum in die Umgebung ablassen kann, wenn der Druck gesenkt werden soll. Der Überdruck kann durch eine Pumpe oder durch Heizen zustande kommen.

Auf Über- und Unterdruck muss das Behältersystem nur dann gleichzeitig stabil sein, wenn im Bereich um den Normaldruck herum gearbeitet werden soll, also im Fall von Wasser im Bereich von 100°C.

Das Verfahren kann Batch-weise durchgeführt werden oder kontinuierlich. In der Fig. 1 sind schematisch Ein- und Ausfluss angegeben um die Anlage zu füllen und zu entleeren.

Wichtig am beschriebenen Verfahren ist die genaue Einhaltung der geforderten Temperatur-Druckverhältnisse. Im Idealzustand, wenn die Anlage überhaupt keine Lecks aufweist und sich nur die geringe, zugelassene Menge Fremdgas im Dampfraum beinhaltet, muss der Druckregulator 9 nach Prozessbeginn überhaupt nicht eingeschalten werden. Der Destillationsprozess arbeitet, einmal eingerichtet, selbständig weiter, solange die Prozessparameter im vorgegebenen Bereich bleiben, das heisst, solange ein Temperaturgefälle zwischen T1 und T2 besteht. Wenn die Anlage praktisch keine Lecks umfasst, muss der Druckregulator 9 höchstens etwa 1-5% der gesamten Destillationsdauer arbeiten. Bei einigen kleinen Lecks sind bereits mit Einsatzzeiten des Druckregulators 9 zwischen 3% und 50 % der Betriebszeit zu rechnen.

Ein gravierendes Problem von Lecks ist das Eindringen von Fremdgas. Dichtheit der Anlage ist von hoher Wichtigkeit, da bereits ein geringfügig erhöhter Fremdgasanteil in erster Linie für eine stark verminderte Effizient der Anlage verantwortlich ist. Es hat sich erwiesen, dass handelsübliche Qualitäten von Pumpen, Rohrverbindungen, Flanschen und anderen Komponenten nicht ausreichen, um leckfrei, wie hier gefordert, zu arbeiten. Selbst hochwertige Komponenten reichen diesbezüglich in der Regel noch nicht aus, um den Anforderungen zu entsprechen. Zudem kann es zeitraubend und kostspielig sein, ein Leck zu finden. Um Lecks zu verhindern, können alle Komponenten, die druckrelevante Verbindungen und Anschlüsse enthalten, geflutet werden. Diese Komponenten umfassen die Teile der Wände von Verdampfer 2 und Kondensator 3, an denen Flansche angebracht sind, sowie alle Komponenten wie Pumpen, Fühler, Ventile, Ein- und Auslässe und andere Flansche. Es kann sogar die ganze Anlage geflutet werden.

Geflutet wird vorzugsweise mit dem Medium, das dem Kondensat 5 entspricht. Durch die Flutung wird gewährleistet, dass bei allen undichten Stellen keinesfalls Fremdgas eintreten kann, sondern nur Kondensat. Dieses stört in keinem Masse den Prozess, es ist nicht einmal feststellbar. Durch diese Flutung erübrigt sich eine ständige Kontrolle der Anlage auf Dichtigkeit, was sehr aufwändig sein kann.

Die einzige Energie, die zwingend für den Prozess aufgewendet werden muss, ist die für die Schaffung der unterschiedlichen Temperaturen T1 und T2 sowie für die Erhaltung einer Temperaturdifferenz, und, wenn die Ausbeute erhöht werden soll, die Energie für die Förderung der Flüssigkeiten zu den Zersprüheinheiten zwecks Vergrösserung der Oberflächen.

Ein entscheidender Unterschied des erfindungsgemässen Verfahrens zum Stand der Technik besteht im kontrollierten Absaugen des Fremdgases. Das beschriebenen Druckreduzieren wird am Ende des Kondensationsweges gemacht, um nicht nur den Druck zu reduzieren, sondern um das Fremdgas zu entfernen. Im Unterscheid zu bekannten Verfahren wird nur so lange abgesaugt, bis der Fremdgasanteil unter einen bestimmten Grenzwert gefallen ist. Dies wird durch den Vergleich des vorherrschenden Mischdrucks pm zum bei der vorherrschenden Mischtemperatur Tm ermittelten Sättigungsdampfdruck ps überwacht. Hat der Mischdruck pm einen bestimmten Grenzwert, beispielsweise 0.1% über dem Sättigungsdampfdruck ps erreicht, wird das Absaugen eingestellt, um zu verhindern, dass der Prozess schlechter läuft. Zum einen wird die Effizient des Prozesses mit niedrigerem Druck nicht besser, zum anderen braucht das Absaugen unnötig Energie, und zudem wird Dampf aus dem System entfernt, dessen Energie nun nicht mehr in einer späteren Stufe verwendet werden kann. Daher läuft der Prozess nur in einem schmalen Druck-Temperaturbereich optimal, der stets einzuhalten ist, um das Verfahren energieeffizient durchführen zu können.

Bevorzugt wird der beschriebene Prozess in einem Container, vorzugsweise in einem ISO Container (20 oder 40 Fuss Normcontainer) durchgeführt, in dem sich die Anlage befindet und welcher ein Teil der Anlage sein kann. Der Transport vom Herstellungsort zum Betriebsort der Anlage kann so einfach und kostengünstig per Containerschiff oder per Lastwagen erfolgen. Zudem erleichtert dies die Wartung, da, wenn die Destillation an einem der Zivilbevölkerung fernen Ort durchgeführt wird, der Container wiederum bequem auf einem Lastwagen in eine Wartungsstelle gebracht werden kann.

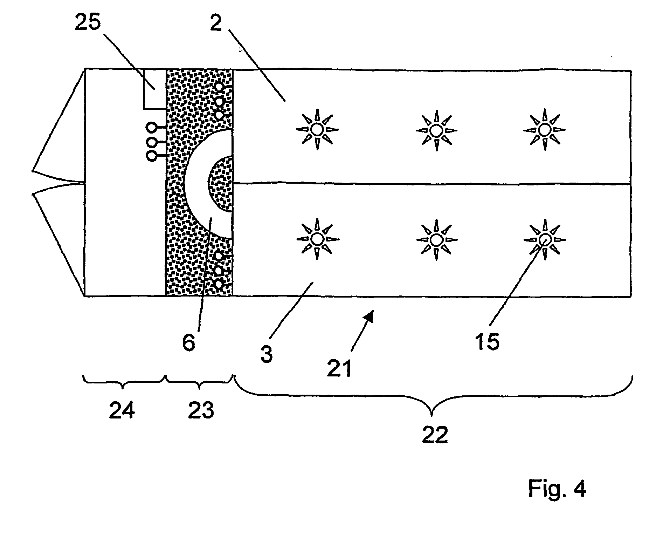

Die in Fig. 4 beschriebene erfindungsgemässe Destillationsanlage umfasst ein Behältersystems 1 mit je mindestens einem Kondensator 3, einem Verdampfer 2 sowie einen den Verdampfer 2 und den Kondensator 3 verbindenden Dampfraum 6 zum Destillieren eines Ausgangsmaterials 4 nach einem oben beschriebenen Verfahren. Diese Destillationsanlage ist in einem Container 21, insbesondere in einem ISO Container 21 untergebracht. Erfindungsgemäss wirken Teile des Containers 21, beispielsweise Wände, gleichzeitig als Teile des Behältersystems 1. Somit ist die Destillationsanlage im Container 21 integriert. Solche Container 21 sind günstig zu erwerben und hoch standardisiert. Zudem gibt es leckfreie Container 21, welche den hier beschriebenen Ansprüchen genügen. Verdampfer 2 und Kondensator 3 können separat in verschiedenen Containern 21 untergebracht sein, verbunden durch einen an diesen verbindend angebrachten Dampfraum 6, oder sie können sich einen Container 21 teilen, wie dies in Fig. 4 dargestellt ist. In einem Container 21 können auch mehrere unabhängige Verdampfer 2 und/oder Kondensatoren 3 für verschiedene Druck- und Temperaturstufen untergebracht und prozessdienlich miteinander verbunden sein.

In der dargestellten Anordnung der Fig. 4 verfügt der Container 21 über einen Reaktorbereich 22, in dem sich der Verdampfer (2) und der Kondensator (3) befinden, über einen gefluteten Bereich 23, in dem sich druckrelevante Komponenten wie Pumpen, Ventile, Fühler und Flansche befinden, sowie über einen Servicebereich 24, für elektronische Komponenten 25, die nicht geflutet sind. Dieser Servicebereich 24 ist zugänglich zur Bedienung und Wartung der Anlage.

Die Anordnungen innerhalb des Containers 21 können auch alternativ eingerichtet sein. Insbesondere kann der Dampfraum 6 direkt in einer Trennwand zwischen Verdampfer 2 und Kondensator 3 durch Öffnungen oder Kanäle ausgestaltet sein. Der geflutete Bereich 23 mit den Anschlüssen kann auch in oberen Bereich des Containers 21 angeordnet sein. Als weitere Alternative können Verdampfer 2 und Kondensator 3 auch übereinander positioniert sein.

Für Destillationsanlagen mit höheren Kapazitäten lassen sich erfindungsgemäss auch mehrere Container übereinander oder nebeneinander anordnen, die miteinander verbunden sind.

### Bezugszeichenliste

- 1: Behältersystem
- 2: Verdampfer
- 3: Kondensator
- 4: Ausgangsmaterial
- 5: Kondensat
- 6: Dampfraum
- 7: Drucksensor
- 8: Temperatursensor
- 9: Regulator (Pumpe und/oder Ventil)
- 10: Dampfdruckkurve
- 11: Solldruckbereich
- 12: Leitungen
- 13: Heizung
- 14: Kühlung
- 15: Zersprüheinheit
- 16: Ventilator
- 17: Blenden
- 18: Mischer
- 19: Schutzblende
- 20: Wärmetauscher
- 21: Container
- 22: Reaktorbereich
- 23: gefluteter Bereich
- 24: Servicebereich
- 25: Elektronische Komponenten

- pm: Mischdruck im Dampfraum
- ps: Sättigungsdampfdruck
- Tm: Mischtemperatur im Dampfraum
- T1: Temperatur im Verdampfer
- T2: Temperatur im Kondensator
- Fd: die zu destillierende Flüssigkeit
- Dk: der zu kondensierende Dampf
- V: Pumpe und/oder Ventil zum Regulieren des Drucks

## Patentansprüche

1. Verfahren zum Destillieren eines Ausgangsmaterials (4) umfassend eine zu destillierende Flüssigkeit Fd, unter Verwendung eines gasdichten, auf Überund/oder Unterdruck festen Behältersystems (1), das einen Verdampfer (2) mit dem Ausgangsmaterial (4), das temperiert werden kann, einen Kondensator (3) zum Kondensieren der zu Dampf gewordenen, temperierbaren Flüssigkeit Fd zum Kondensat (5), sowie einen den Verdampfer (2) und den Kondensator (3) verbindenden und deren Dämpfe mischbar vereinenden Dampfraum (6) umfasst, wobei der Dampfraum (6) mit einem Drucksensor (7) zum Messen des sich im durchmischten Dampf im Dampfraum (6) einstellenden Mischdruckes pm, einem Temperaturfühler (8) zum Messen der sich im durchmischten Dampf im Dampfraum (6) einstellenden Mischtemperatur Tm, sowie mit einem Druckregulator (9) versehen ist, durchzuführen durch die Verfahrensschritte, dass
a) der Verdampfer (2) mit dem Ausgangsmaterial (4) auf eine erste Temperatur T1 und der Kondensator (3) auf eine zweite, niedrigere Temperatur T2 gebracht werden;
b) der Mischdruck pm und die Mischtemperatur Tm gemessen werden;
c) der Sättigungsdampfdruck ps der Flüssigkeit Fd zu der gemessenen Mischtemperatur Tm bestimmt wird;
d) ein Solldruckbereich (11) bestimmt wird, der **durch** eine untere Druckgrenze p1, die mindestens 0.1% über dem Sättigungsdampfdruck ps und eine obere Druckgrenze p2, die höchstens 6% über dem Sättigungsdampfdruck ps liegt, begrenzt ist;
e) der Mischdruck pm mit dem Solldruckbereich (11) verglichen wird;
f) der Mischdruck pm genau so lange durch den Druckregulator (9) reduziert wird, bis er die untere Druckgrenze p1 erreicht hat;
g) die Schritte a) bis e) wiederholt werden, bis der Mischdruck pm die obere Druckgrenze p2 erreicht hat;
h) die Schritte f) und g) wiederholt werden, bis die Destillation gestoppt werden soll;
**dadurch gekennzeichnet, dass** bei der Druckreduktion im Schritt f) Gase am Ende des Kondensationsweges im Kondensator (3) abgesaugt werden, um möglichst viel Fremdgas aus dem Behältersystem (1) zu entfernen.

2. Verfahren nach Anspruch 1, **dadurch gekennzeichnet, dass** die Temperaturdifferenz T1-T2 zwischen dem Verdampfer (2) und dem Kondensator (3) zwischen 1 und 10K, vorzugsweise zwischen 1 und 3K beträgt.

3. Verfahren nach einem der vorhergehenden Ansprüche, **dadurch gekennzeichnet, dass** die Oberflächen des Ausgangsmaterials (4) im Verdampfer (2) und/oder die Oberfläche des Kondensats (5) im Kondensator (3) vergrössert wird, vorzugsweise durch Versprühen des Ausgangsmaterials (4) bzw. des Kondensats (5).

4. Verfahren nach Anspruch 3, **dadurch gekennzeichnet, dass** die Oberflächenvergrösserung dadurch erreicht wird, dass eine flächenvergrössernde, poröse Füllpackung eingebracht wird.

5. Verfahren nach einem der vorhergehenden Ansprüche, **dadurch gekennzeichnet, dass** die Dampfverteilung im Dampfraum (6) durch einen Ventilator (16) durchmischt wird, wobei vorzugsweise der Antrieb des Ventilators (16) durch den eingesprühten Massenstrom des zu verdampfenden Mediums oder das eingesprühten Kondensats erfolgt.

6. Verfahren nach einem der vorhergehenden Ansprüche mit Rückbezug auf Anspruch 3, **dadurch gekennzeichnet, dass** die Fremdgasbefreiung im Schritt f) durch eine Vakuumstrahlpumpe geschieht, welche entweder mit dem zu versprühenden Kondensat (5) der selben oder einer kühleren Stufe, mit Dampf einer anderen Stufe oder mit Umgebungsluft angetrieben wird.

7. Verfahren nach einem der vorhergehenden Ansprüche, **dadurch gekennzeichnet, dass** das Verfahren in zwei oder mehreren solcher Behältersysteme (1, 1', ...) durchgeführt wird, wobei die Temperaturbereiche T1, T2 der einzelnen Behältersysteme (1,1', ...) aneinander angrenzen.

8. Verfahren nach Anspruch 7, **dadurch gekennzeichnet, dass** die Energie zum Heizen eines Verdampfers (2) oder Kondensators (3) mindestens teilweise direkt oder indirekt über Wärmetauscher aus der Energie eines anderen Verdampfers (2) oder Kondensators (3) gewonnen wird, dessen Temperatur verändert werden soll.

9. Verfahren nach einem der Ansprüche 7 oder 8, **dadurch gekennzeichnet, dass** die Verdampfer (2) und/oder Kondensatoren (3) der verschiedenen Behältersysteme (1, 1', ...) übereinander angeordnet sind.

10. Verfahren nach einem der vorhergehenden Ansprüche, **dadurch gekennzeichnet, dass** das Behältersystem (1) und/oder die Verrohrung ganz oder hauptsächlich aus Kunststoff bestehen.

11. Verfahren nach einem der vorhergehenden Ansprüche, **dadurch gekennzeichnet, dass** die gesamte Anlage oder Teile davon, insbesondere Wände des Behältersystems (1), an denen Verbindungsstücke angebracht sind, und/oder Pumpen, Ventile, Fühler, Flansche und/oder andere druckrelevante Komponenten, geflutet angeordnet sind.

12. Verfahren nach einem der vorhergehenden Ansprüche, **dadurch gekennzeichnet, dass** der Druckregulator (9) in Schritt f) höchstens 50%, vorzugsweise höchstens 3% der Destillationsdauer arbeitet.

13. Verfahren nach einem der vorhergehenden Ansprüche, **dadurch gekennzeichnet, dass** die Destillation in einem Container, insbesondere in einem ISO Container durchgeführt wird.

14. Destillationsanlage umfassend ein Behältersystem (1) mit einem Kondensator (3), einem Verdampfer (2) sowie einen den Verdampfer (2) und den Kondensator (3) verbindenden und deren Dämpfe mischbar vereinenden Dampfraum (6), wobei der Dampfraum (6) mit einem Drucksensor (7) zum Messen des sich im durchmischten Dampf im Dampfraum (6) einstellenden Mischdruckes pm, einem Temperaturfühler (8) zum Messen der sich im durchmischten Dampf im Dampfraum (6) einstellenden Mischtemperatur Tm, sowie mit einem Druckregulator (9) versehen ist, zum Destillieren eines Ausgangsmaterials (4) nach einem Verfahren gemäss einem der vorhergehenden Ansprüche, **dadurch** wobei die Anlage in einem Container (21), insbesondere in einem ISO Container untergebracht ist, **dadurch gekennzeichnet, dass** die Destillationsanlage derart im Container (21) integriert ist, dass Teile des Containers, insbesondere Wände, als Teile des Behältersystems (1) wirken.

15. Destillationsanlage gemäss Anspruch 14 **dadurch gekennzeichnet, dass** der Container (21) über einen Reaktorbereich (22) verfügt, in dem sich der Verdampfer (2) und der Kondensator (3) befinden, über einen gefluteten Bereich (23), in dem sich druckrelevante Komponenten wie Pumpen (9), Ventile, Fühler (7, 8) und Flansche befinden, sowie über einen Servicebereich (24), für elektronische Komponenten 25, der zur Bedienung und Wartung der Anlage zugänglich ist.

16. Destillationsanlage gemäss einem der Ansprüche 14 oder 15, **dadurch gekennzeichnet, dass** in einem Container (21) mehrere Verdampfer (2) und Kondensatoren (3) verschiedener Druck- und Temperaturstufen untergebracht und prozessdienlich miteinander verbunden sind.

## Claims

1. A method for distilling a basic material (4) comprising a liquid Fd to be distilled using a gas-tight container system (1) resistant to overpressure and/or underpressure, which comprises an evaporator (2) with the basic material (4), which can be temperature-controlled, a condenser (3) for condensing the temperature-controllable liquid Fd, which has turned into steam, into condensate (5), as well as a steam chamber (6) connecting the evaporator (2) and the condenser (3) and miscibly combining the vapours thereof, wherein the steam chamber (6) is provided with a pressure sensor (7) for measuring the mixing pressure pm existing in the mixed steam in the steam chamber (6), a temperature sensor (8) for measuring the mixing temperature Tm existing in the mixed steam in the steam chamber (6) and a pressure regulator (9), to be implemented by the process steps that
a) the evaporator (2) with the basic material (4) is brought to a first temperature T1 and the capacitor (3) to a second, lower temperature T2;
b) the mixing pressure pm and the mixing temperature Tm are measured;
c) the saturated steam pressure ps of the liquid Fd is determined at the measured mixing temperature Tm;
d) a reference pressure range (11) is determined, which is limited by a lower pressure limit p1, which is at least 0.1% above the saturated steam pressure ps, and a lower pressure limit p2, which is maximum 6% above the saturated steam pressure ps;
e) the mixing pressure pm is compared with the reference pressure range (11);
f) the mixing pressure pm is precisely reduced by the pressure regulator (9) until it has reached the lower pressure limit p1;
g) steps a) to e) are repeated until the mixing pressure pm has reached the upper pressure limit p2;
h) steps f) and g) are repeated until the distillation is to be stopped;
**characterised in that** with the pressure reduction in step f) gases in the condenser (3) at the end of the condensation path are extracted by suction, in order to remove as much foreign gas as possible from the container system (1).

2. The method according to claim 1, **characterised in that** the temperature difference T1-T2 between the evaporator (2) and the condenser (3) is between 1 and 10K, preferably between 1 and 3K.

3. The method according to one of the preceding claims, **characterised in that** the surfaces of the basic material (4) in the evaporator (2) and/or the surface of the condensate (5) in the condenser (3) are enlarged, preferably by spraying the basic material (4) or condensate (5).

4. The method according to claim 3, **characterised in that** the surface enlargement is achieved by introducing an area-enlarging, porous filler packing.

5. The method according to one of the preceding claims, **characterised in that** the steam distribution in the steam chamber (6) is thoroughly mixed by a fan (16), wherein the fan (16) is preferably driven by the sprayed-in volume flow of the medium to be evaporated or the sprayed-in condensate.

6. The method according to one of the preceding claims with reference to claim 3, **characterised in that** the foreign gas removal at step f) is performed by a vacuum jet pump, which is driven either by the condensate (5) to be sprayed of the same or a cooler stage, by steam of another stage or by ambient air.

7. The method according to one of the preceding claims, **characterised in that** the method is conducted in two or more such container systems (1, 1', ...), wherein the temperature ranges T1, T2 of the individual container systems (1, 1', ...) are adjacent to one another.

8. The method according to claim 7, **characterised in that** the energy for heating an evaporator (2) or condenser (3) is obtained at least partially directly or indirectly via heat exchangers from the energy of another evaporator (2) or condenser (3), the temperature of which is to be changed.

9. The method according to one of the claims 7 or 8, **characterised in that** the evaporator (2) and/or condensers (3) of the different container systems (1, 1', ...) are arranged above one another.

10. The method according to one of the preceding claims, **characterised in that** the container system (1) and/or the pipework are made wholly or predominantly from plastic.

11. The method according to one of the preceding claims, **characterised in that** the entire system or parts thereof, particularly walls of the container system (1), to which connection pieces are attached, and/or pumps, valves, sensors, flanges and/or other pressure-relevant components, are arranged in a flooded manner.

12. The method according to one of the preceding claims, **characterised in that** the pressure regulator (9) in step f) works at maximum 50%, preferably maximum 3% of the distillation duration.

13. The method according to one of the preceding claims, **characterised in that** the distillation is carried out in a container, particularly in an ISO container.

14. A distillation system comprising a container system (1) with a condenser (3), an evaporator (2) and a steam chamber (6) connecting the evaporator (2) and the condenser (3) and miscibly combining the vapours thereof, wherein the steam chamber (6) is provided with a pressure sensor (7) for measuring the mixing pressure pm existing in the mixed steam in the steam chamber (6), a temperature sensor (8) for measuring the mixing temperature Tm existing in the mixed steam in the steam chamber (6) and also a pressure regulator (9) for distilling a basic material (4) based on a method according to one of the preceding claims, wherein the system is housed in a container (21), particularly in an ISO container, **characterised in that** the distillation system is integrated in the container (21) in such a manner that parts of the container, particularly the walls thereof, act as parts of the container system (1).

15. The distillation system according to claim 14, **characterised in that** the container (21) has a reactor area (22), in which the evaporator (2) and the condenser (3) are found, above a flooded area (23), in which pressure-relevant components such as pumps (9), valves, sensors (7, 8) and flanges are located, as well as a service area (24) for electronic components (25), which is accessible for operating and maintaining the system.

16. The distillation system according to one of the claims 14 or 15, **characterised in that** a plurality of evaporators (2) and condensers (3) of different pressure and temperature stages are housed in a container (21) and connected to one another in a manner serving the process.

## Revendications

1. Procédé de distillation d'une matière de départ (4) comprenant un liquide Fd à distiller, par utilisation d'un système de réservoirs (1) étanche aux gaz, résistant à la surpression et/ou à la dépression, qui comprend un évaporateur (2) avec la matière de départ (4), qui peut être tempérée, un condensateur (3) pour condenser le liquide Fd tempérable transformé en vapeur pour obtenir le produit de condensation (5), ainsi qu'un espace à vapeur (6) reliant l'évaporateur (2) et le condensateur (3) et associant leurs vapeurs (6) de manière mélangeable, la chambre à vapeur (6) étant munie d'un capteur de pression (7) pour mesurer la pression de mélange pm s'établissant dans la vapeur mélangée dans la chambre à vapeur (6), d'une sonde thermique (8) pour mesurer la température de mélange Tm s'établissant dans la vapeur mélangée dans la chambre à vapeur (6), ainsi que d'un régulateur de pression (9), à réaliser par les étapes de procédé consistant en ce que
a) l'évaporateur (2) avec la matière de départ (4) est amené à une première température T1 et le condensateur (3) est amené à une deuxième température plus basse T2 ;
b) la pression de mélange pm et la température de mélange Tm sont mesurées ;
c) la pression de vapeur saturante ps du liquide Fd à la température de mélange Tm mesurée est définie ;
d) une plage de pression de consigne (11) est définie, qui est limitée par une limite inférieure de pression p1, qui est supérieure d'au moins 0.1% à la pression de vapeur saturante ps et une limite supérieure de pression p2, qui est supérieure d'un maximum de 6% à la pression de vapeur saturante ps ;
e) la pression de mélange pm est comparée avec la plage de pression de consigne (11) ;
f) la pression de mélange pm est réduite par le régulateur de pression (9) sur une période exactement suffisante pour atteindre la limite inférieure de pression p1 ;
g) les étapes a) à e) sont répétées jusqu'à ce que la pression de mélange pm ait atteint la limite supérieure de pression p2 ;
h) les étapes f) et g) sont répétées jusqu'à ce que la distillation doive être arrêtée ;
**caractérisé en ce que** lors de la réduction de pression à l'étape f), des gaz sont aspirés à l'extrémité de la trajectoire de condensation dans le condensateur (3) pour éliminer la plus grande quantité possible de gaz étranger hors du système de réservoirs (1).

2. Procédé selon la revendication 1, **caractérisé en ce que** la différence de température T1-T2 entre l'évaporateur (2) et le condensateur (3) se situe entre 1 et 10K, de préférence entre 1 et 3K.

3. Procédé selon l'une quelconque des revendications précédentes, **caractérisé en ce que** les surfaces de la matière de départ (4) dans l'évaporateur (2) et/ou la surface du produit de condensation (5) dans le condensateur (3) sont agrandies, de préférence par pulvérisation de la matière de départ (4) ou du produit de condensation (5).

4. Procédé selon la revendication 3, **caractérisé en ce que** l'agrandissement de surfaces est obtenu **en ce qu'**une garniture de charge poreuse, agrandissant les surfaces est introduite.

5. Procédé selon l'une quelconque des revendications précédentes, **caractérisé en ce que** la distribution de vapeur dans la chambre à vapeur (6) est mélangée par un ventilateur (16) l'entraînement du ventilateur (16) s'effectuant de préférence par le flux massique introduit par vaporisation du milieu à volatiliser ou du produit de condensation introduit par vaporisation.

6. Procédé selon l'une quelconque des revendications précédentes, avec renvoi à la revendication 3, **caractérisé en ce que** la libération des gaz étrangers à l'étape f) s'effectue à l'aide d'un injecteur à vide, qui est entraîné soit par le produit de condensation (5) à vaporiser de la même phase ou d'une phase plus froide, par de la vapeur d'une autre phase ou par de l'air ambiant.

7. Procédé selon l'une quelconque des revendications précédentes, **caractérisé en ce que** le procédé est réalisé dans deux ou dans plusieurs systèmes de réservoirs (1, 1', ...) de ce type, les plages de températures T1, T2 de chacun des systèmes de réservoirs (1, 1', ...) étant avoisinantes les unes des autres.

8. Procédé selon la revendication 7, **caractérisé en ce que** l'énergie pour chauffer un évaporateur (2) ou un condensateur (3) est obtenue au moins en partie, directement ou indirectement par l'intermédiaire d'échangeurs thermiques, à partir de l'énergie d'un autre évaporateur (2) ou condensateur (3) dont la température doit être modifiée.

9. Procédé selon l'une quelconque des revendications 7 ou 8, **caractérisé en ce que** les évaporateurs (2) et/ou les condensateurs (3) des différents systèmes de réservoirs (1, 1', ...) sont disposés en superposition.

10. Procédé selon l'une quelconque des revendications précédentes, **caractérisé en ce que** le système de réservoirs (1) et/ou la tuyauterie sont entièrement ou principalement en matière plastique.

11. Procédé selon l'une quelconque des revendications précédentes, **caractérisé en ce que** l'ensemble de l'installation ou des parties de cette dernière, notamment des parois du système de réservoirs (1) sur lesquelles sont montées des pièces de liaison et/ou des pompes, des soupapes, des sondes, des brides et/ou d'autres composants déterminants pour la pression sont disposés en étant noyés.

12. Procédé selon l'une quelconque des revendications précédentes, **caractérisé en ce que** le régulateur de pression (9) dans l'étape f) fonctionne au maximum pendant 50%, de préférence pendant au maximum 3% de la durée de distillation.

13. Procédé selon l'une quelconque des revendications précédentes, **caractérisé en ce que** la distillation est réalisée dans un conteneur, notamment dans un conteneur ISO.

14. Installation de distillation, comprenant un système de réservoirs (1) avec un condensateur (3), un évaporateur (2), ainsi qu'une chambre à vapeur (6) reliant l'évaporateur (2) et le condensateur (3) et associant leurs vapeurs de manière mélangeable, la chambre à vapeur (6) étant munie d'un capteur de pression (7) pour mesurer la pression de mélange pm s'établissant dans la vapeur mélangée dans la chambre à vapeur (6), d'une sonde thermique (8) pour mesure la température de mélange Tm s'établissant dans la vapeur mélangée dans la chambre à vapeur (6), ainsi que d'un régulateur de pression (9), pour la distillation d'une matière de départ (4) d'après un procédé selon l'une quelconque des revendications précédentes, l'installation étant logée dans un conteneur (21), notamment dans un conteneur ISO, **caractérisée en ce que** l'installation de distillation (21) est intégrée dans le conteneur de telle sorte que des parties du conteneur, notamment des parois agissent en tant que parties du système de réservoirs (1).

15. Installation de distillation selon la revendication 14, **caractérisée en ce que** le conteneur (21) dispose d'une zone de réacteur (22) dans laquelle se trouvent l'évaporateur (2) et le condensateur (3), d'une zone noyée (23), dans laquelle se trouvent des composants déterminants en matière de pression, tels que des pompes (9), des soupapes, des sondes (7, 8) et des brides, ainsi que d'une zone de service (24) pour des composants électroniques (25), qui est accessible pour la manipulation et pour la maintenance de l'installation.

16. Installation de distillation selon l'une quelconque des revendications 14 ou 15, **caractérisée en ce que** plusieurs évaporateurs (2) et condensateurs (3) de différentes phases de pression et de température sont logés dans un conteneur (21) et reliés entre eux de manière à servir le processus.
